# EUROPEAN PATENT APPLICATION

(11) **EP 4 783 011 A1**
(43) Date of publication of application: **29.07.2026**
(21) Application number: 25208522.0
(22) Date of filing: 14.10.2025
(51) Int. Cl.: G06F 11/30, G06F 11/14

(54) **CONTROLLER SYSTEM FOR VEHICLE**

(30) Priority: 24.01.2025 KR 20250011688
(71) Applicant: Hyundai Mobis Co., Ltd., Gangnam-gu Seoul 06141 (KR)
(72) Inventor: YOON, Kyung Ho, 16891 Yongin-si, Gyeonggi-do (KR)
(74) Representative: Jung, Minkyu

(57) **Abstract**

Provided is a controller system for a vehicle including a first cluster including a plurality of processors, a second cluster disposed separately from the first cluster and including a plurality of memories that are in communication with the plurality of processors, and a third cluster disposed separately from the first cluster and the second cluster and including a plurality of storages that are in communication with the plurality of processors and the plurality of memories.

## Description

This application claims the benefit of Korean Patent Application No. 10-2025-0011688, filed on January 24, 2025, which is hereby incorporated by reference as if fully set forth herein.

### BACKGROUND OF THE DISCLOSURE

### Field of the Disclosure

The present disclosure relates to a controller system for a vehicle in which processors, memories, and storages that were individually integrated in a plurality of controllers are separately grouped and installed based on their respective functions.

### Discussion of the Related Art

In general, as functions of a vehicle improve, multiple controllers are installed inside the vehicle. Further, a processor, a memory, and a storage may be installed in each of the multiple controllers corresponding to a function of each controller. For example, the processor, the memory, and the storage may be installed independently in one controller.

As such, because the processor, the memory, and the storage are installed for each controller, to upgrade the memories or the storages to higher specifications, all of the controllers should be dismantled and then desired components should be replaced, which makes maintenance difficult.

### SUMMARY OF THE DISCLOSURE

Embodiments of the present disclosure may provide a controller system for a vehicle in which processors, memories, and storages that were individually integrated in a plurality of controllers are separately grouped and installed based on their respective functions, thereby facilitating upgrade of the system.

Embodiments of the present disclosure may provide a controller system for a vehicle in which processors, memories, and storages that were individually integrated in a plurality of controllers are separately grouped and installed based on their respective functions, thereby implementing an HW on Demand (FoD) service.

Embodiments of the present disclosure may provide a controller system for a vehicle in which, as processors, memories, and storages that were individually integrated in a plurality of controllers are separately grouped and installed based on their respective functions, heat dissipators may be formed in different structures based on respective heat generation levels of the processors, the memories, and the storages, thereby improving a heat dissipation efficiency.

Problems to be solved in the present disclosure are not limited to the problems mentioned above, and other problems not mentioned may be clearly understood by a person having ordinary knowledge in the technical field to which the present disclosure belongs from a description below.

Embodiments of the present disclosure provide a controller system for a vehicle including a first cluster including a plurality of processors, a second cluster disposed separately from the first cluster and including a plurality of memories that are in communication with the plurality of processors, and a third cluster disposed separately from the first cluster and the second cluster and including a plurality of storages that are in communication with the plurality of processors and the plurality of memories.

Solutions of the embodiments of the present disclosure are not limited to the solutions mentioned herein, and other solutions not mentioned may be clearly understood by those skilled in the art from the description below.

According to the embodiments of the present disclosure, provided is the controller system for the vehicle in which the processors, the memories, and the storages that were individually integrated in the plurality of controllers are separately grouped and installed based on their respective functions, thereby facilitating the upgrade of the system.

According to the embodiments of the present disclosure, provided is the controller system for the vehicle in which the processors, the memories, and the storages that were individually integrated in the plurality of controllers are separately grouped and installed based on their respective functions, thereby implementing the HW on Demand (FoD) service.

According to the embodiments of the present disclosure, provided is the controller system for the vehicle in which, as the processors, the memories, and the storages that were individually integrated in the plurality of controllers are separately grouped and installed based on their respective functions, the heat dissipators may be formed in the different structures based on the respective heat generation levels of the processors, the memories, and the storages, thereby improving the heat dissipation efficiency.

Further scope of applicability of the present disclosure will become apparent from a detailed description below. However, because various changes and modifications within the spirit and scope of the present disclosure will be apparent to those skilled in the art, it should be understood that the detailed description and specific embodiments, such as preferred embodiments of the present disclosure, are given by way of example only.

### BRIEF DESCRIPTION OF THE DRAWINGS

FIG. 1 is a block diagram of a controller system for a vehicle according to an embodiment of the present disclosure.
FIG. 2 is a block diagram schematically illustrating processors to which a multi-lock step structure is applied.
FIG. 3 is a block diagram of a controller system for a vehicle according to another embodiment of the present disclosure.
FIG. 4 is a block diagram of a controller system for a vehicle according to still another embodiment of the present disclosure.

### DETAILED DESCRIPTION OF THE DISCLOSURE

In the following description of examples or embodiments of the present disclosure, reference will be made to the accompanying drawings in which it is shown by way of illustration specific examples or embodiments that can be implemented, and in which the same reference numerals and signs can be used to designate the same or like components even when they are shown in different accompanying drawings from one another. Further, in the following description of examples or embodiments of the present disclosure, detailed descriptions of well-known functions and components incorporated herein will be omitted when it is determined that the description may make the subject matter in some embodiments of the present disclosure rather unclear. Names of the respective elements used in the following explanations may be selected only for convenience of writing the specification and may be thus different from those used in actual products. The terms such as "including", "having", "containing", "constituting" "made up of", and "formed of" used herein are generally intended to allow other components to be added unless the terms are used with the term "only". As used herein, singular forms are intended to include plural forms unless the context clearly indicates otherwise.

Terms, such as "first", "second", "A", "B", "(A)", or "(B)" may be used herein to describe elements of the present disclosure. Each of these terms is not used to define essence, order, sequence, or number of elements etc., but is used merely to distinguish the corresponding element from other elements.

The shapes, sizes, dimensions (e.g., length, width, height, thickness, radius, diameter, area, etc.), ratios, angles, number of elements, ratios, angles, numbers, and the like, which are illustrated in the drawings to describe various example embodiments of the present disclosure are merely given by way of example. Therefore, the present disclosure is not limited to the illustrations in the drawings. Any implementation described herein as an "example" is not necessarily to be construed as preferred or advantageous over other implementations.

The word "exemplary" is used to mean serving as an example or illustration. Embodiments are example embodiments. Aspects are example aspects. Any implementation described herein as an "example" is not necessarily to "Embodiments," "examples," "aspects," and the like should not be construed as preferred or advantageous over other implementations. An embodiment, an example, an example embodiment, an aspect, or the like may refer to one or more embodiments, one or more examples, one or more example embodiments, one or more aspects, or the like, unless stated otherwise. Further, the term "may" encompasses all the meanings of the term "can."

When it is mentioned that a first element "is connected or coupled to", "contacts or overlaps" etc. a second element, it should be interpreted that, not only can the first element "be directly connected or coupled to" or "directly contact or overlap" the second element, but a third element can also be "interposed" between the first and second elements, or the first and second elements can "be connected or coupled to", "contact or overlap", etc. each other via a fourth element. Here, the second element may be included in at least one of two or more elements that "are connected or coupled to", "contact or overlap", etc. each other.

When time relative terms, such as "after", "subsequent to", "next", "before", and the like, are used to describe processes or operations of elements or configurations, or flows or steps in operating, processing, manufacturing methods, these terms may be used to describe non-consecutive or non-sequential processes or operations unless the term "directly" or "immediately" is used together.

The terms, such as "below," "lower," "above," "upper" and the like, may be used herein to describe a relationship between element(s) as illustrated in the drawings. It will be understood that the terms are spatially relative and based on the orientation depicted in the drawings.

In addition, when any dimensions, relative sizes etc. are mentioned, it should be considered that numerical values for an elements or features, or corresponding information (e.g., level, range, etc.) include a tolerance or error range that may be caused by various factors (e.g., process factors, internal or external impact, noise, etc.) even when a relevant description is not specified. Further, the term "may" fully encompasses all the meanings of the term "can".

Features of various embodiments of the present disclosure may be partially or overall coupled to or combined with each other, and may be variously inter-operated with each other and driven technically as those skilled in the art can sufficiently understand. Embodiments of the present disclosure may be carried out independently from each other, or may be carried out together in co-dependent relationship.

The term "or" means "inclusive or" rather than "exclusive or." That is, unless otherwise stated or clear from the context, the expression that "x uses a or b" means any one of natural inclusive permutations. For example, "a or b" may mean "a," "b," or "a and b." For example, "a, b or c" may mean "a," "b," "c," "a and b," "b and c," "a and c," or "a, b and c."

The phase that an element (e.g., layer, film, region, component, section, or the like) is "provided in," "disposed in," or the like in another element may be understood as that at least a portion of the element is provided in, disposed in, or the like in another element, or that the entirety of the element is provided in, disposed in, or the like in another element. The phase that an element (e.g., layer, film, region, component, section, or the like) "contacts," "overlaps," or the like with another element may be understood as that at least a portion of the element contacts, overlaps, or the like with a least a portion of another element, that the entirety of the element contacts, overlaps, or the like with a least a portion of another element, or that at least a portion of the element contacts, overlaps, or the like with the entirety of another element.

Unless otherwise defined, all terms (including technical and scientific terms) used herein have the same meaning as commonly understood by one of ordinary skill in the art to which example embodiments belong. It will be further understood that terms, such as those defined in commonly used dictionaries, should be interpreted as having a meaning for example consistent with their meaning in the context of the relevant art and should not be interpreted in an idealized or overly formal sense unless expressly so defined herein. For example, the term "part" or "unit" may apply, for example, to a separate circuit or structure, an integrated circuit, a computational block of a circuit device, or any structure configured to perform a described function as should be understood to one of ordinary skill in the art.

Hereinafter, various embodiments of the present disclosure will be described in detail with reference to the attached drawings.

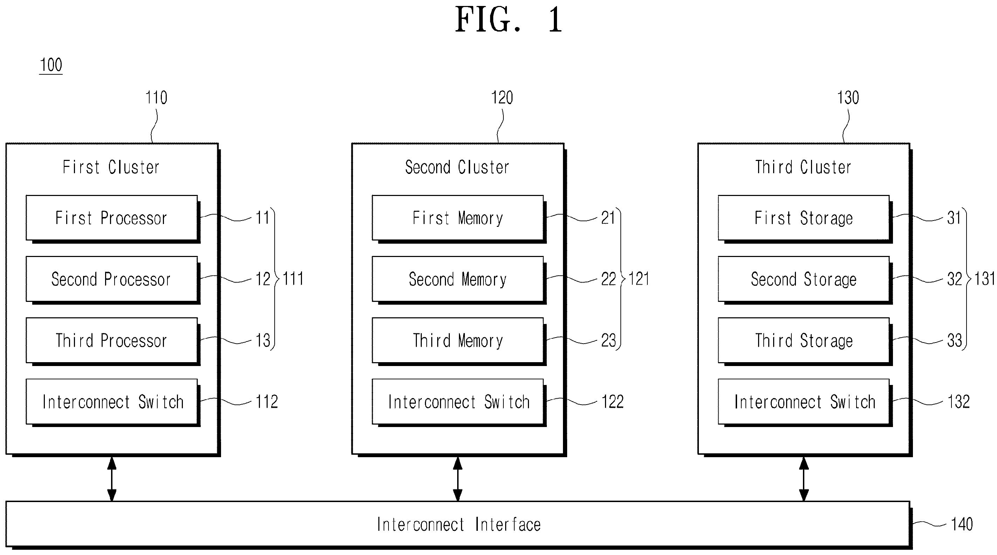

FIG. 1 is a block diagram of a controller system for a vehicle according to an embodiment of the present disclosure.

Referring to FIG. 1, a controller system 100 for a vehicle may include a first cluster 110, a second cluster 120, and a third cluster 130.

The controller system 100 for the vehicle in the present embodiment may be used to manage processors, memories, and storages that were individually integrated in various controllers, such as an automatic transmission controller, an electronic component controller, a lamp controller, a steering controller, a brake controller, a suspension controller, and the like, by separately grouping them based on their respective functions.

The first cluster 110 may include a plurality of processors 111 that control overall operations of components equipped in the controllers. For example, the processors 111 may include at least one of a central processing unit (CPU), a micro processor unit (MPU), a micro controller unit (MCU), and a graphics processing unit (GPU). In addition, the processors 111 may perform operations on applications or programs installed in the controllers.

The first cluster 110 may manage the processors 111 that were independently arranged in the plurality of controllers by arranging them in a single space. For example, when the controllers are composed of a first controller that controls transmission of the vehicle, a second controller that controls steering, and a third controller that controls a brake, the processors 111 may include a first processor 11 that controls an operation of the first controller, a second processor 12 that controls an operation of the second controller, and a third processor 13 that controls an operation of the third controller.

As such, as the processors 111 that were arranged in the respective controllers are installed in the single space, the processors 111 may be replaced and managed at once. That is, in the past, to upgrade the processors 111 respectively arranged in the plurality of controllers, each controller had to be dismantled and then a replacement work had to be performed. However, according to the present embodiment, only the first cluster 110 needs to be dismantled to replace the processors 111, which increases ease of use.

The second cluster 120 may be disposed separately from the first cluster 110 and may include a plurality of memories 121 formed to be in communication with the plurality of processors 111. For example, the memories 121, which are for storing various data, commands, and/or information, may be formed as RAMs.

The second cluster 120 may manage the memories 121 that were independently arranged in the plurality of controllers by arranging them in a single space. For example, when the controllers are composed of the first controller that controls the transmission of the vehicle, the second controller that controls the steering, and the third controller that controls the brake, the memories may include a first memory 21 that stores commands and/or information of the first controller, a second memory 22 that stores commands and/or information of the second controller, and a third memory 23 that stores commands and/or information of the third controller.

As such, as the memories 121 that were arranged in the respective controllers are installed in the single space, the memories 121 may be individually replaced and managed, which increases the ease of use.

The third cluster 130 may be disposed separately from the first cluster 110 and the second cluster 120, and may include a plurality of storages 131 that are formed to be in communication with the plurality of processors 111 and the plurality of memories 121. For example, the storages 131, which are for non-temporarily storing the programs of the controllers, may include at least one of a read only memory (ROM), an erasable programmable ROM (EPROM), an electrically erasable programmable ROM (EEPROM), a flash memory 121, a hard disk, and a removable disk.

The third cluster 130 may manage the storages 131 that were independently arranged in the plurality of controllers by arranging them in a single space. For example, when the controllers are composed of the first controller that controls the transmission of the vehicle, the second controller that controls the steering, and the third controller that controls the brake, the storages 131 may include a first storage 31 that non-temporarily stores a program of the first controller, a second storage 32 that non-temporarily stores a program of the second controller, and a third storage 33 that non-temporarily stores a program of the third controller.

As such, as the storages 131 that were arranged in the respective controllers are installed in the single space, only the storages 131 may be individually replaced and managed, which increases the ease of use.

The first cluster 110, the second cluster 120, and the third cluster 130 may respectively include interconnect switches 112, 122, and 132 to be connected to each other so as to enable direct communication between the plurality of processors 111, the plurality of memories 121, and the plurality of storages 131. In this regard, the first cluster 110, the second cluster 120, and the third cluster 130 may be distinguished from each other by being assigned respective unique domains.

The first cluster 110, the second cluster 120, and the third cluster 130 may transmit and receive data with each other via an interconnect interface 140. For example, the interconnect interface 140 may include Gen-Z or Compute eXpress Link (CXL) that allows the data to be transmitted and received based on Peripheral Component Interconnect Express (PCIe). As the interface 140 is composed of the Gen-Z or the Compute eXpress Link (CXL), a large amount of data may be processed quickly.

As described above, as the processors 111, the memories 121, and the storages 131 that constitute hardware of the controller system 100 for the vehicle are installed and managed by being separately grouped based on their respective functions, upgrading the system may be facilitated. That is, in the past, to replace the physically fixed memories 121 and storages 131 with higher-spec memories and storages, all of the controllers had to be dismantled. However, according to the present embodiment, all of the memories 121 and the storages 131 may be replaced by dismantling only the second cluster 120 and the third cluster 130, so that upgrading the controller system may be facilitated.

In addition, as the processors 111, the memories 121, and the storages 131 are managed by being separately grouped based on their respective functions, implementation of an HW on Demand (FoD) service that allows consumers to directly select and expand specifications of the processors 111/the memories 121/the storages 131 may be enabled.

In one example, although not shown, housings in which the first cluster 110, the second cluster 120, and the third cluster 130 are independently arranged may be included. For example, the first cluster 110, the second cluster 120, and the third cluster 130 may be respectively arranged in three housings, and each housing may include a heat dissipator for heat exchange.

As the dedicated heat dissipators are separately disposed for the processors 111, the memories 121, and the storages 131, the heat dissipators may be designed based on heat generation characteristics. That is, the processors 111, the memories 121, and the storages 131 may have different heat generation levels. When the heat dissipators are designed with different structures based on the heat generation levels of the processors 111, the memories 121, and the storages 131, a heat dissipation efficiency may be improved.

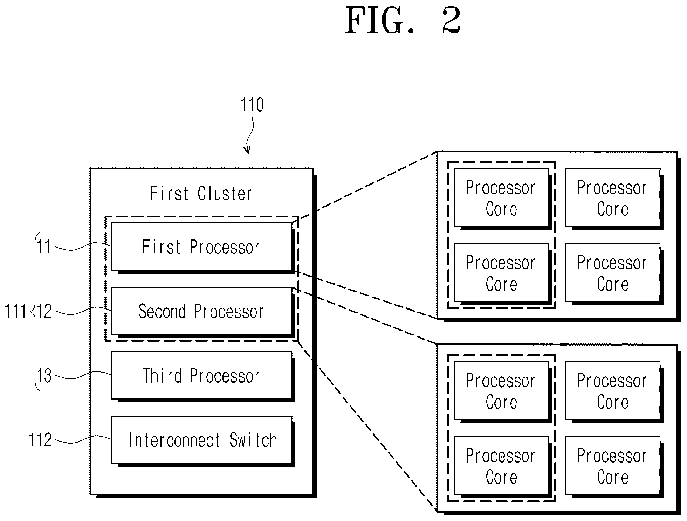

FIG. 2 is a block diagram schematically illustrating processors to which a multi-lock step structure is applied.

Referring to FIG. 2, at least two processors 111 may select multi-processor cores multiplexed in a lock step manner to perform operations, and when one of the processors 111 fails, a lock may be set. In the present embodiment, the processors 111 are illustrated as being formed in a quad-core scheme, but are able to be formed in various types such as a dual-core or a hexa-core.

The lock step refers to a scheme of verifying error-free operation by allowing two or more processor cores to perform the same operation and comparing results thereof with each other. Therefore, a risk level of the controller system 100 may be guaranteed via the processor implementation in the lock step manner. For example, the controller system 100 may secure an automotive safety integrity level (ASIL) level indicating a safety integrity level of the vehicle of ASIL-B or higher.

The controller system 100 for the vehicle may maintain a performance of the controller by setting the lock when one of the plurality of processors 111 fails. For example, when the first processor 11 fails, the first processor 11 may be locked and a performance of the second processor 12 may be maintained, so that the controller system 100 may operate smoothly. In this case, a fail-safe may be strengthened, and thus the ASIL level may be improved.

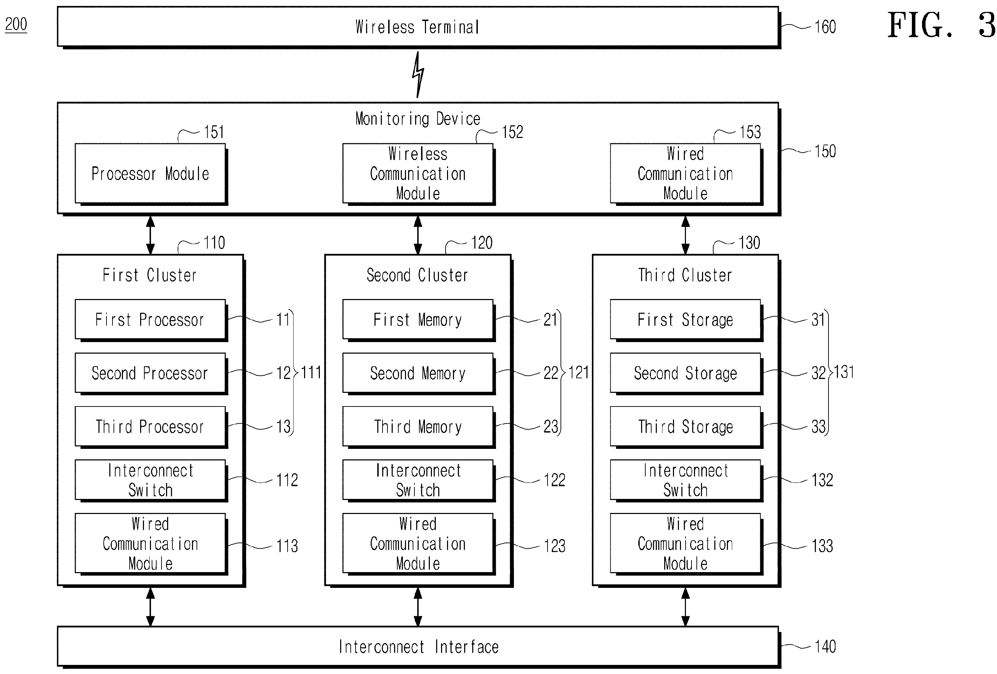

FIG. 3 is a block diagram of a controller system for a vehicle according to another embodiment of the present disclosure. In the present embodiment, differences from the above-described embodiment will be mainly described.

Referring to FIG. 3, a controller system 200 for a vehicle may further include a monitoring device 150 and wired communication modules 113, 123, and 133 for transmitting and receiving data with the monitoring device 150. For example, the wired communication modules 113, 123, and 133 may be disposed in the first cluster 110, the second cluster 120, and the third cluster 130, respectively, and may be formed as Ethernet or FlexRay switches.

The monitoring device 150, which is for monitoring operations of the first cluster 110, the second cluster 120, and the third cluster 130, may include a processor module 151, a wireless communication module 152, and a wired communication module 153. Here, the wired communication module 153 of the monitoring device 150 may be an Ethernet or FlexRay switch.

As such, as the controller system 200 for the vehicle includes the monitoring device 150, individual abnormality diagnosis and monitoring of the clusters 110, 120, and 130 may be enabled. For example, when the first processor 11 fails to be in communication with the first memory 21 and the first storage 31, a retransmission interrupt signal is generated to the first memory 21 and the first storage 31. Thereafter, when the communication fails again, the processor module 151 of the monitoring device 150 may transmit a communication error signal to an external wireless terminal 160 via the wireless communication module 152. Then, a user may check abnormalities of the first memory 21 and the first storage 31 via the wireless terminal 160 and proceed with replacement or repair.

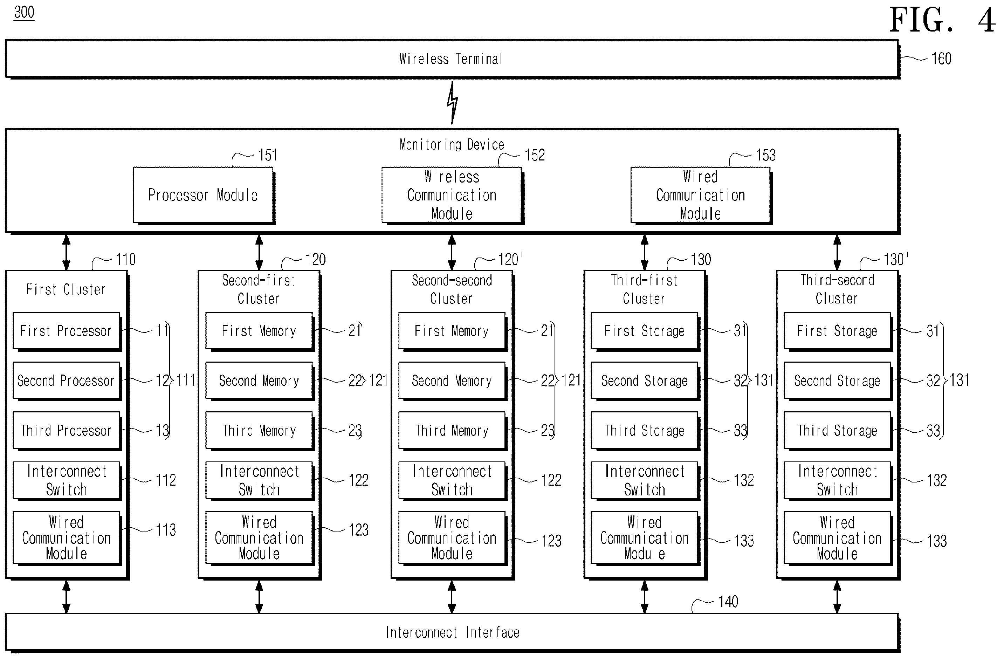

FIG. 4 is a block diagram of a controller system for a vehicle according to still another embodiment of the present disclosure. In the present embodiment, differences from the above-described embodiment will be mainly described.

Referring to FIG. 4, a controller system 300 for a vehicle may include a plurality of second clusters 120 and 120' and a plurality of third clusters 130 and 130', and the clusters may be in communication with each other. Here, the second clusters 120 and 120' and the third clusters 130 and 130' are the same as the above-described second cluster and third cluster, respectively, differing only in their increased numbers.

As such, as the numbers of second clusters 120 and 130' and third clusters 130 and 130' increase, when an abnormality occurs in memories 121 and/or storages 131 disposed in one second cluster 120 and/or one third cluster 130, the data may be processed using memories 121 and/or storages 131 disposed in a remaining second cluster 120' and/or a remaining third cluster 130'.

For example, in FIG. 4, when abnormalities occur in a second-first cluster 120 and a third-first cluster 130, an abnormal signal may be sensed via the monitoring device 150. Then, the abnormal signal is transmitted to a remaining second-second cluster 120' and a third-second cluster 130' and then a change in a management system is requested. Accordingly, the second-second cluster 120' and the third-second cluster 130' may operate, and the monitoring device 150 may transmit this to the wireless terminal 160. With such a process, the user may identify that the abnormalities have occurred in the second-first cluster 120 and the third-first cluster 130. Further, because only the second-first cluster 120 and the third-first cluster 130 with the abnormalities need to be repaired, maintenance becomes easier.

The embodiments of the present disclosure described above will be briefly described as follows.

According to embodiments of the present disclosure, provided is a controller system for a vehicle including a first cluster including a plurality of processors, a second cluster disposed separately from the first cluster and including a plurality of memories that are in communication with the plurality of processors, and a third cluster disposed separately from the first cluster and the second cluster and including a plurality of storages that are in communication with the plurality of processors and the plurality of memories.

According to embodiments of the present disclosure, the first cluster, the second cluster, and the third cluster may be communicatively connected to each other via an interconnect switch.

According to embodiments of the present disclosure, the controller system may further include an interconnect interface that enables transmission and reception of data between the first cluster, the second cluster, and the third cluster.

According to embodiments of the present disclosure, the interconnect interface may include a Gen-Z or a Compute eXpress Link (CXL) that allows the data to be transmitted and received based on Peripheral Component Interconnect Express (PCIe).

According to embodiments of the present disclosure, at least two of the processors may perform operations by selecting multi-processor cores multiplexed in a lock step manner, and set a lock when one of the at least two fails.

According to embodiments of the present disclosure, the controller system may further include a monitoring device that monitors operations of the first cluster, the second cluster, and the third cluster.

According to embodiments of the present disclosure, each of the first cluster, the second cluster, and the third cluster may further include a wired communication module that transmits and receives data to and from the monitoring device.

According to embodiments of the present disclosure, the monitoring device may include a wireless communication module that are in communication with an external wireless terminal.

According to embodiments of the present disclosure, the second cluster and the third cluster may respectively include a plurality of second clusters and a plurality of third clusters that are in communication with each other.

According to embodiments of the present disclosure, the controller system may further include a housing where each of the first cluster, the second cluster, and the third cluster is independently disposed, and the housing may include a heat dissipator for heat exchange.

The above description has been presented to enable any person skilled in the art to make and use the technical idea of the present disclosure, and has been provided in the context of a particular application and its requirements. Various modifications, additions and substitutions to the described embodiments will be readily apparent to those skilled in the art, and the general principles defined herein may be applied to other embodiments and applications without departing from the spirit and scope of the present disclosure. The above description and the accompanying drawings provide an example of the technical idea of the present disclosure for illustrative purposes only. That is, the disclosed embodiments are intended to illustrate the scope of the technical idea of the present disclosure.

## Claims

1. A controller system for a vehicle, the controller system comprising:
a first cluster including a plurality of processors;
a second cluster disposed separately from the first cluster and including a plurality of memories configured to be in communication with the plurality of processors; and
a third cluster disposed separately from the first cluster and the second cluster and including a plurality of storages configured to be in communication with the plurality of processors and the plurality of memories.

2. The controller system of claim 1, wherein the first cluster, the second cluster, and the third cluster are communicatively connected to each other via an interconnect switch.

3. The controller system of claim 1 or 2, further comprising an interconnect interface configured to enable transmission and reception of data between the first cluster, the second cluster, and the third cluster.

4. The controller system of claim 3, wherein the interconnect interface includes a Gen-Z or a Compute eXpress Link (CXL) configured to allow the data to be transmitted and received based on a Peripheral Component Interconnect Express (PCIe).

5. The controller system of any one of claims 1 to 4, wherein at least two of the plurality of processors are configured to perform operations by selecting multi-processor cores multiplexed in a lock step manner, and set a lock when one of the at least two fails.

6. The controller system of any one of claims 1 to 5, further comprising a monitoring device configured to monitor operations of the first cluster, the second cluster, and the third cluster.

7. The controller system of claim 6, wherein each of the first cluster, the second cluster, and the third cluster further includes a wired communication module configured to transmit and receive data to and from the monitoring device.

8. The controller system of claim 6 or 7, wherein the monitoring device includes a wireless communication module configured to be in communication with an external wireless terminal.

9. The controller system of any one of claims 1 to 8, wherein the second cluster and the third cluster respectively include a plurality of second clusters and a plurality of third clusters configured to be in communication with each other.

10. The controller system of any one of claims 1 to 9, further comprising a housing where each of the first cluster, the second cluster, and the third cluster is independently disposed,
wherein the housing includes a heat dissipator for heat exchange.
